# EUROPEAN PATENT SPECIFICATION

(11) **EP 2 502 503 B1**
(45) Date of publication and mention of the grant of the patent: **05.11.2014**
(21) Application number: 11250376.8
(22) Date of filing: 24.03.2011
(51) Int. Cl.: A23D 9/02, C11B 3/12, C11B 7/00

(54) **Process for fractionating a vegetable oil**
Verfahren zur Fraktionierung eines Pflanzenöls
Procédé pour le fractionnement d'une huile végétale

(43) Date of publication of application: 26.09.2012
(73) Proprietor: LODERS CROKLAAN B.V., 1521 AZ Wormerveer (NL)
(72) Inventor: Faaij, Gerardus Nicolaas Wilhelmus, 1521 AZ Wormerveer (NL); Schweitzer, Erik Johan Anton, 1521 AZ Wormerveer (NL)
(74) Representative: Potter Clarkson LLP

(56) References cited:
- EP-A1- 0 235 422
- EP-A1- 2 169 038
- WO-A1-02/074887
- GB-A- 2 371 545
- US-A1- 2010 286 258

## Description

This invention relates to a process for fractionating a vegetable oil, to the products obtainable by the process and to apparatus for carrying out the process. In particular, the invention involves the fractionation of vegetable oils that comprise free fatty acids.

Vegetable oils containing triglycerides of fatty acids are useful in, for example, foodstuffs. Many vegetable oils need to be processed following extraction from their natural source in order to remove impurities. For example, the oils may be degummed to remove phospholipids, treated with bleaching earth to remove impurities and minor components such as chlorophyll and carotenoids that can give colour to the oil and subsequently steam stripped and deodorised to remove the free fatty acids that can give an undesirable taste and/or smell to the refined oil. Palm oil is typically refined by steps that include degumming, bleaching and deodorising the oil.

Typically, vegetable oils such as palm oil are treated in a stripper to remove the majority of the free fatty acids as a distillate, leaving the less volatile triglycerides behind. Stripping normally takes place in the presence of steam at reduced pressure. The free fatty acids are collected as the volatile fraction from the stripper. This fraction is known as fatty acid distillate (FAD) and is a valuable commercial product that can be sold as a component for the manufacture of animal feed, used directly as animal feed or used, for example, in the manufacture of soap or biodiesel. Fatty acid distillate from palm oil is known as palm fatty acid distillate (PFAD).

Impurities such as dioxins are sometimes present at low levels in vegetable oils and, due to their volatility, dioxins may be concentrated in the PFAD. Dioxins are toxic at low concentrations and so EU feed manufacturers must limit the level of dioxins that can be present in PFAD when used for animal feed.

EP-A-0235422 discloses a method and apparatus for refining and deodorising fats and oils.

Machado et al, Cliênc Technol Aliment, vol 17, no 4, Campinas Dec 1997 disclose that the carboxylic acids in palm fatty acid distillates can be separated using supercritical carbon dioxide.

Faessier, in Proceedings of the World Conference on Palm and Coconut Oils for the 21st Century: Sources, Processing, Applications and Competition, AOCS Press, 1999, pages 67-71 describes a palm oil stripping and fatty acid distillation process in which a wash section can be included.

The present invention seeks to solve the problem of reducing the level of dioxins that are present in the free fatty acid fractions obtained during the processing of vegetable oils, such as PFAD, whilst providing a high content (> 95 % by weight) of free fatty acids in the product. The invention also aims to provide an improved process for obtaining triglyceride and free fatty acid fractions from vegetable oil. The invention also seeks to solve the problem of increasing the yield of the triglycerides obtained in a vegetable oil refining process.

According to the invention, there is provided a continuous process for fractionating a vegetable oil comprising stripping the vegetable oii in a vessel to form a top fraction and a bottom fraction, condensing a part of the top fraction in a scrubber at a first temperature and condensing the other part of the top fraction that is not condensed by the scrubber in a condenser at a second temperature lower than the first temperature to form a condensate, dividing the condensate from the condenser into at least two portions, collecting a first portion of the condensate as a first product and returning a second portion of the cooled condensate to the scrubber at a temperature of from 10D °C to 160 °C to act as a liquid phase in the scrubber.

In another aspect, the invention provides a process for reducing the level of dioxins in a palm fatty acid distillate comprising fractionating palm oil by volatilising a fraction of the palm oil in a vessel, condensing a part of the volatile fraction in a scrubber at a first temperature and condensing the other part of the volatile fraction that is not condensed by the scrubber in a condenser at a second temperature lower than the first temperature to form a condensate, collecting a first portion of the condensate as a first product and returning a second portion of the cooled condensate to the scrubber at a temperature of from 1 DO °C to 160 °C to act as a liquid phase in the scrubber, wherein the first product is the palm fatty acid distillate.

The invention also provides a product obtainable by the process of the invention which is a palm fatty acid distillate comprising at least 98% by weight of free fatty acids, wherein at least 90% by weight of the free fatty acids are palmitic, oleic and linoleic acids, from 0.05 to 0.3% by weight diglycerides, from 0.1 to 0.5% by weight of total tocols and less than 0.5 ng/kg of dioxins.

Further provided by the invention is a product obtainable by the process of the invention comprising from 35 to 45% by weight diglycerides, wherein at least 85% by weight of the fatty acids in the diglycerides are palmitic, oleic and linoleic acids, from 1.5% to 3% by weight squalene and from 1.5% to 3% by weight total tocols (tocopherols and tocotrienols).

Also provided by the invention is apparatus for carrying out a continuous process for fractionating a vegetable oil comprising a stripper for forming a top fraction and a bottom fraction from the vegetable oil, a scrubber for condensing a part of the top fraction and a condenser for condensing the other part of the top fraction that is not condensed by the scrubber to form a condensate, a divider that divides the condensate from the condenser into at least two portions, a collector for collecting a first portion of the condensate as a first product, a cooling system for reducing the temperature of at least a second portion of the condensate to from 100 °C to 160 °C and a return path for the second portion of the condensate to the scrubber to act as a liquid phase in the scrubber.

The invention involves a process that uses a stripper, a scrubber and a condenser. The terms "stripper", "scrubber" and "condenser", and related terms, are well-known to those skilled in the art. Those skilled in the art will be aware that a "scrubber" and a "condenser" may be the same apparatus but performing a different function. Suitable "strippers", "scrubbers" and "condensers" and related apparatus are available from companies such as Desmet Ballestra Group N.V., Zaventem, Belgium, Sulzer Chemtech AG, Winterthur, Switzerland, Alfa Laval in Sweden, Lurgi in Germany and Lipico in Singapore.

The term "fractionating" and related terms, as used herein, refer to a process in which less volatile components are separated from more volatile components, typically comprising the separation of triglycerides from free fatty acids in vegetable oils. Fractionation may be all or part of a refining process. The terms "top" and "bottom" are well known in the art and refer to more volatile and less volatile fractions, respectively, as well as to the upper, lower temperature parts of the apparatus and the lower, higher temperature parts of the apparatus.

The term "continuous" takes its normal meaning in the art and preferably refers to a process, typically carried out on an industrial scale, that is designed to operate with constant supply of starting materials and constant removal of product. It will be appreciated that the process may be stopped temporarily, although this is not preferred, and that certain aspects of the process may be operated batchwise, as long as the process continues to operate.

The vegetable oil that is used in the process of the invention may be any oil that comprises triglycerides and free fatty acids. The vegetable oil typically comprises more than 1 % by weight of free fatty acids, such as from 2 to 8 % by weight free fatty acids. Preferably, the vegetable oil is palm oil. The palm oil may have been treated in one or more physical and/or chemical treatment steps prior to the process of the invention. For example, typical treatments include one or more of degumming, bleaching and low temperature refining.

The process of the invention is carried out at a reduced pressure, typically of less than 10 mm Hg, such as from 0.5 to 5 mm Hg. The use of low pressures of this type is conventional in processes for refining vegetable oils. It will be appreciated that this reduced pressure is applied throughout the apparatus that is used in the invention (including the stripper, scrubber and condenser, for example) but that the actual pressure may vary slightly at different points of the process (for example, the pressure in the condenser may be different from the pressure in the stripper but both are still below 10 mm Hg).

The process of the invention is preferably carried out in the presence of steam. Steam can provide a source of heat and act as a carrier for the volatile fraction. Thus, the process typically involves steam stripping.

The vessel that is used in the process of the invention preferably comprises a stripper and a scrubber. Although the stripper and the scrubber may be arranged in different vessels, it is preferred that they are in the same vessel, for example the scrubber may be sited above the stripper in the same column. The stripper preferably operates at a temperature in the range of from 200 to 280 °C. The scrubber operates at a lower temperature than the stripper. The stripper is preferably a steam stripper.

The scrubber condenses a part of the top (more volatile) fraction. Preferably, the scrubber operates at a temperature in the range of from 120 to 220 °C. In the scrubber, the top fraction is exposed to condensate from the condenser. Typically, the condensate is sprayed into the top fraction. Usually, the scrubber will comprise a packed bed through which the top fraction passes, with the condensate sprayed onto the bed. The material that is condensed in the scrubber returns to the stripper.

Preferably, the scrubber acts to remove at least a part of the monoglycerides, diglycerides and dioxins from the first product. Tocols and squalenes also condense in this scrubber. In particular, the less volatile ("heavy") dioxins are preferably removed by the scrubber to a greater extent than if the scrubber is not present.

Optionally, a fraction may be taken from the outlet at the bottom of the scrubber. This fraction is rich in diglycerides (comprising at least 10 % by weight diglycerides) and comprises dioxins, tocols and squalene.

The part of the top fraction that is not condensed by the scrubber, but instead passes through the scrubber, passes to a condenser. The condenser may be a part of the vessel that comprises the stripper but is preferably housed in a different vessel. The condenser may be identical in construction to the scrubber. The condenser preferably operates at a temperature in the range of from 70 to 140 °C. In the condenser, free fatty acids are condensed. The relatively small amount of volatile material that is not condensed in the condenser is typically removed in the vacuum system.

It will be appreciated that the temperature in the stripper, scrubber and condenser will typically not be uniform across the particular piece of apparatus. For example, when the stripper, scrubber and/or condenser comprise a packed bed of material, the temperature at the top of the bed will generally be lower than the temperature at the bottom of the bed. Thus, there may be a temperature gradient through the bed. The temperature ranges given herein are intended to encompass the temperatures throughout the particular piece of apparatus, for example from the top of the bed to the bottom of the bed.

The fatty acid-containing condensate obtained from the condenser is divided into at least two portions; the condensate may be further divided into three or more portions if desired. Preferably, the weight ratio of the first portion to the second portion is in the range of from 10:1 to 1:1, more preferably from 5:1 to 2:1. It has been found that dividing the condensate in this way has advantages for the removal of the dioxins from the first product containing the free fatty acids. Preferably, most of the condensate (> 90%, more preferably > 95%, by weight of the condensate) is returned to the condenser. Accordingly, the first and second portions preferably represent less than 10 % by weight (more preferably less than 5 % by weight) of the condensate. The weight ratio of the first portion to the second portion to the third portion that is returned to the condenser is preferably (1 to 10):(1):(50 to 100).

The temperature of the second portion of the condensate is adjusted to from 100 °C to 160 °C, preferably from 100 °C to 140 °C, before it is returned to the scrubber. Typically, the condensate is cooled, for example in one or more heat exchangers.

The first product preferably comprises free fatty acids in an amount of at least 95% by weight, more preferably at least 96%, such as at least 97% or at least 98%, for example at least 99% by weight. When the vegetable oil is palm oil, typically at least 85% or at least 90% by weight of the free fatty acids are palmitic (C16:0), oleic (C18:1) and linoleic (C18:2) acids. The first product preferably comprises less than 0.3% by weight diglycerides, such as from 0.05 to 0.2% by weight diglycerides. The first product preferably comprises less than 0.7% by weight of total tocols, such as from 0.1% to 0.6%, from 0.1% to 0.5% or from 0.1% to 0.3% by weight tocols. The first product typically contains less than 0.5 ng/kg dioxins.

In one example, the first product is a palm fatty acid distillate comprising at least 98% by weight free fatty acids, wherein at least 90% by weight of the free fatty acids are palmitic (C16:0), oleic (C18:1) and linoleic (C18:2) acids, from 0.05 to 0.3% by weight diglycerides, from 0.1 to 0.5% by weight tocols and less than 0.5 ng/kg dioxins

The term "fatty acid", as used herein, refers to straight chain carboxylic acids having from 8 to 24 carbon atoms which may be saturated or unsaturated. Unsaturated carboxylic acids may be mono- or poly- unsaturated (i.e., they may have one or more carbon-carbon double bonds). "Free" fatty acids are not bonded to glycerol as part of a glyceride molecule.

The term "tocols" is well known to those skilled in the art and refers to total tocotrienols and tocopherols (i.e., alpha- and beta- tocopherols and alpha- , beta-, gamma-, and delta- tocotrienols).

The bottom fraction comprises the majority of the triglycerides in the starting vegetable oil. This second product is the main product, by weight based on the starting vegetable oil, of the fractionation process. The bottom fraction typically comprises at least 85% by weight, more preferably at least 90% by weight, of triglycerides. The bottom fraction may be collected from the vessel as a second product. Alternatively, the process may comprise the further step of transferring the bottom fraction from the vessel to a deodoriser and collecting a second product as the bottom fraction from the deodoriser following deodorisation. Deodorisers are well known in the art. Deodorisation may be carried out in the presence of adsorbents such as activated carbon (e.g., Norit). By transferring the bottom fraction to the deodoriser, the level of any dioxins (particularly the less volatile "heavy" dioxins, for example having three or more chlorine atoms per molecule) in the triglycerides may be reduced even further.

A third product may optionally be collected from the bottom of the scrubber bed. This third product comprises at least 10% by weight diglycerides, more preferably at least 30%, such as from 35% to 45% by weight diglycerides. When the vegetable oil is palm oil, preferably at least 85% by weight of the fatty acids in the diglycerides are palmitic (C16:0), oleic (C18:1) and linoleic (C18:2) acids. The third product comprises at least 1.5% by weight squalene, preferably from 1.5% to 3% by weight squalene. The product also comprises at least 1.5% by weight total tocols, such as from 1.5% to 6% by weight tocols.

In one example, the third product comprises from 35% to 45% by weight diglycerides, wherein at least 85% by weight of the fatty acids in the diglycerides are palmitic (C16:0), oleic (C18:1) and linoleic (C18:2) acids, from 1.5% to 3% by weight squalene and from 1.5% to 3% by weight tocols.

An example of the continuous process for fractionating a vegetable oil according to the invention comprises stripping palm oil in a vessel to form a top fraction and a bottom fraction, condensing a part of the top fraction in a scrubber at a first temperature and condensing the other part of the top fraction that is not condensed by the scrubber in a condenser at a second temperature lower than the first temperature to form a condensate, dividing the condensate from the condenser into at least two portions at a weight ratio of the first portion to the second portion in the range of from 10:1 to 1:1, collecting a first portion of the condensate as a palm oil fatty acid distillate, returning a second portion of the condensate to the scrubber at a temperature of from 100 °C to 160 °C to act as a liquid phase in the scrubber and collecting a triglyceride product as the bottom fraction from the stripper and optionally deodorising the triglyceride product.

Another example of the continuous process for fractionating a vegetable oil according to the invention comprises stripping palm oil in a vessel at 200 to 280 °C and a pressure of less than 10 mm Hg to form a top fraction and a bottom fraction, condensing a part of the top fraction in a scrubber at 120 to 220 °C and condensing the other part of the top fraction that is not condensed by the scrubber in a condenser at 70 to 140 °C to form a condensate, dividing the condensate from the condenser into at least two portions at a weight ratio of the first portion to the second portion in the range of from 10:1 to 1:1, collecting a first portion of the condensate as a palm oil fatty acid distillate, returning a second portion of the condensate to the scrubber at a temperature of from 100 °C to 160 °C to act as a liquid phase in the scrubber and collecting a triglyceride product as the bottom fraction from the stripper and optionally deodorising the triglyceride product.

Yet another example of the continuous process for fractionating a vegetable oil according to the invention comprises stripping palm oil in a vessel at 200 to 280 °C and a pressure of less than 10 mm Hg to form a top fraction and a bottom fraction, condensing a part of the top fraction in a scrubber at 120 to 220 °C and condensing the other part of the top fraction that is not condensed by the scrubber in a condenser at 70 to 140 °C to form a condensate, dividing the condensate from the condenser into at least three portions at a weight ratio of the first portion to the second portion to the third portion in the range of from (1 to 10):(1):(50 to 100), collecting the first portion of the condensate as a palm oil fatty acid distillate, returning the second portion of the condensate to the scrubber at a temperature of from 100 °C to 160 °C to act as a liquid phase in the scrubber, returning the third portion to the condenser and collecting a triglyceride product as the bottom fraction from the stripper and optionally deodorising the triglyceride product.

The apparatus of the invention is preferably adapted to carry out the continuous process of the invention for fractionating a vegetable oil. The apparatus comprises a stripper for forming a top fraction and a bottom fraction from the vegetable oil, a scrubber for condensing a part of the top fraction and a condenser for condensing the other part of the top fraction that is not condensed by the scrubber to form a condensate. The apparatus also includes a divider that divides the condensate from the condenser into at least two portions (preferably by controlling the flow of each portion), a collector (such as a storage tank) for collecting a first portion of the condensate as a first product and a return path (typically a line or other pipe work) for the second portion of the condensate to the scrubber to act as a liquid phase in the scrubber. The apparatus also comprises a cooling system for reducing the temperature of the second portion of the condensate to from 100 °C to 160 °C prior to the condensate being sent to the scrubber. The cooling system preferably comprises one or more heat exchangers. The apparatus will also comprise a vacuum system that allows the process to operate at a pressure of less than 10 mm Hg.

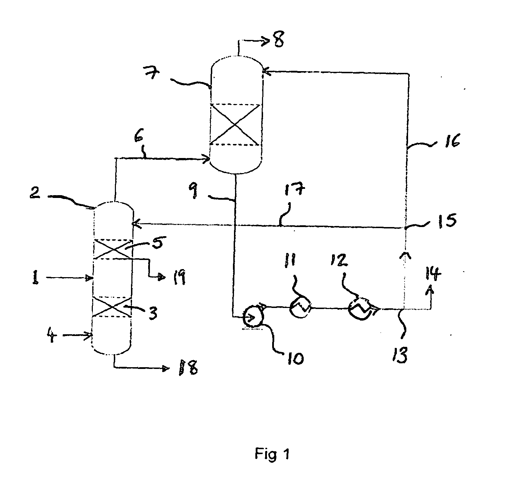

The invention is also described, by way of example only, with reference to the accompanying Figure 1 which shows apparatus for carrying out the process of the invention.

With reference to Figure 1, bleached palm oil 1 is fed to stripper 2 above stripper bed 3. Steam 4 is fed to the stripper 2 below the stripper bed 3. Scrubber 5 is located above stripper bed 3. The top fraction from the stripper 2 passes through scrubber 5 which condenses some of the top fraction which returns to the stripper bed 2. The part of the top fraction that is not condensed by the scrubber 5 passes via a line 6 to a condenser 7. Condenser 7 is linked to vacuum system 8 which maintains the apparatus at a reduced pressure. The condensate formed in the condenser 7 passes via line 9 to a pump 10 and is cooled by a cooling system that comprises heat exchangers 11 and 12. The cooled condensate is divided at divider 13: a portion of the condensate is collected at 14 as a palm fatty acid distillate (PFAD) product. The other portion of the condensate passes to divider 15 where it is divided again: a part of the condensate is returned via line 17 to the scrubber 5 to act as a condensing liquid in the scrubber 5. The remainder of the condensate returns to condenser 7 via line 16.

The bottom fraction from stripper from stripper 2 is removed at 18 and either collected as a triglyceride product or transferred to a deodoriser for deodorisation. Optionally, a diglyceride-containing product can be collected from the bottom of the scrubber at 19.

In a typical process, about 3 to 4 tonnes per hour of PFAD is collected at 14, about 1 tonne per hour of PFAD condensate is returned to scrubber 5 via line 17, about 50 tonnes per hour of PFAD condensate returns to condenser 7 via line 16 and about 80 tonnes per hour of triglyceride is produced at 18.

The following non-limiting examples illustrate the invention and do not limit its scope in any way. In the examples and throughout this specification, all percentages, parts and ratios are by weight unless indicated otherwise.

### Examples

### Example 1 (Comparative)

Bleached palm oil with 0.18 ng/kg dioxins (expressed as TEQ-WHO (upper-bound, only PCDD/F)) and 5.22% of FFA was fed at 263 °C to the top of a stripper column using 0.11 I wt% (of the feed) stripping steam through a packed bed (Sulzer structured packing M252Y) at 2.5 mbar top of column and the fatty acids were condensed at 110 °C in a fatty acid condenser, while the bottom product of the stripper column was fed to a deodoriser running at 2 mbar.

The fatty acid PFAD product composition was analysed to contain a dioxin concentration with TEQ-WHO (upper-bound, only PCDD/F) = 0.59 ng/kg), which is beyond the action limit of the WHO (action limit = 0.5 ng/kg) for GMP+ animal feed. The FFA concentration was measured to be 89 wt% in the PFAD.

### Example 2 (Example of the invention)

A packed bed wash bed scrubber was installed (Sulzer structured packing 125Y) in the stripper column described in Example 1, just above the stripper bed. With a reflux ratio 1:2.1 for reflux flow rate : product flow rate, part of the cooled PFAD product (110 °C) was recycled to the top of the scrubber bed. Bleached palm oil with 0.216 ng/kg of dioxins and 5.12% FFA was fed to the top of the stripper at 267°C using 0.12 wt% (of the feed) of stripping steam at 2.4 mbar top of column. The bottom product of the stripper column was fed to a deodoriser running at 2 mbar.

The fatty acid PFAD product composition was analysed to contain a dioxin concentration of 0.22 ng/kg, well within the EU limit for GMP+ animal feed. The FFA concentration was measured to be above 99 wt%. By increasing the FFA concentration, the rdbPO yield from the deodoriser was increased with 0.3 weight % of the feedstock.

### Composition of feed and products for Example 2

1 = Composition of bleached palm oil (bPO)
2 = Product optionally collected from bottom of the scrubber bed outlet
3 = Composition of palm fatty acid distillate (PFAD) for animal feed
4 = Composition collected from bottom of the stripper outlet

| **Analysis** | **1 bPO** | **2** | **3 PFAD** | **4** |
|---|---|---|---|---|
| FFA | 5.12 | 23 | 100 | 0 |
| C8:0 | 0 | 0.1 | 0 | 0 |
| C10:0 | 0 | 0.1 | 0 | 0 |
| C12:0 | 0.2 | 0.6 | 0.1 | 0.2 |
| C15:0 | 0.1 | 0 | 0.1 | 0.1 |
| C14:0 | 1 | 0.8 | 1.1 | 1 |
| C16:0 | 43.9 | 31.2 | 46.7 | 43.7 |
| C16:1C | 0.2 | 0.1 | 0.2 | 0.2 |
| C17:0 | 0.1 | 0.1 | 0.1 | 0.1 |
| C18:0 | 4.4 | 5.7 | 4.2 | 4.4 |
| C18:1 | 39.4 | 46.3 | 36.9 | 39.7 |
| C18:2 | 9.9 | 11.3 | 9.3 | 9.9 |
| C18:3 | 0.2 | 0.4 | 0.3 | 0.2 |
| C20:0 | 0.4 | 1.6 | 0.3 | 0.4 |
| C20:1C | 0.1 | 0.5 | 0.1 | 0.1 |
| C22:0 | 0.1 | 0.6 | 0 | 0.1 |
| C22:1 | 0 | 0 | 0.5 | 0 |
| C22:1C | | 0 | 0.5 | |
| C24:0 | 0.1 | 0.6 | 0 | 0.1 |
| 1.2DG SP | 1.4 | 10.2 | 0 | 1.9 |
| 1.3DG SP | 6.7 | 30.4 | 0.1 | 6.2 |
| DGtot SP | 8.2 | 40.6 | 0.1 | 8.1 |
| alfa-tocopherol | 0.02 | 0.66 | 0.02 | 0.01 |
| alpha-tocotrienol | 0.02 | 0.52 | 0.02 | 0.02 |
| beta-tocopherol | | | 0.01 | |
| beta-tocotrienol | 0.01 | | 0.06 | |
| gamma-tocotrienol | 0.04 | 1 | 0.03 | 0.03 |
| delta-tocotrienol | 0.01 | 0.31 | 0.01 | 0.01 |
| Total Tocopherols | 0.02 | 0.66 | 0.03 | 0.01 |
| Total Tocotrienols | 0.07 | 1.84 | 0.12 | 0.05 |
| Total Tocols | 0.09 | 2.49 | 0.15 | 0.06 |
| Squalene | n.d. | 2.2 | 0.4 | n.d. |
| H₂O | 0.03 | 0.03 | 0.02 | 0.02 |
| Dioxin TEQ-WHO upper-bound only PCDD/F ng/kg | 0.216 | 2.034 | 0.22 | 0.199 |
| Sum Dioxin and Dioxin like PCB's WHO/TEQ ng/kg | 0.306 | 2.043 | 0.311 | 0.208 |
| Dioxin like PCB TEQ-WHO upper-bound ng/kg | 0.09 | 0.009 | 0.091 | 0.009 |

| | | | | |
|---|---|---|---|---|
| (FFA = free fatty acids; DG = diglycerides; Cx:y is a fatty acid having x carbon atoms and y double bonds) | | | | |

## Claims

1. A continuous process for fractionating a vegetable oil comprising stripping the vegetable oil in a vessel to form a top fraction and a bottom fraction, condensing a part of the top fraction in a scrubber at a first temperature and condensing the other part of the top fraction that is not condensed by the scrubber in a condenser at a second temperature lower than the first temperature to form a condensate, dividing the condensate from the condenser into at least two portions, collecting a first portion of the condensate as a first product and returning a second portion of the cooled condensate to the scrubber at a temperature of from 100 °C to 160 °C to act as a liquid phase in the scrubber.

2. Process as claimed in Claim 1, further comprising transferring the bottom fraction from the vessel to a deodoriser and collecting a second product as the bottom fraction from the deodoriser.

3. Process as claimed in Claim 1, wherein the bottom fraction is collected from the vessel as a second product.

4. Process as claimed in Claim 2 or Claim 3, wherein the second product comprises at least 85% by weight triglycerides.

5. Process as claimed in any one of the preceding claims, wherein the first product comprises at least 95% by weight of free fatty acids and less than 0.5 ng/kg dioxins.

6. Process as claimed in any one of the preceding claims, wherein the first vessel comprises a stripper operating at a temperature in the range of from 200 to 280 °C and a scrubber operating at a lower ternperature.

7. Process as claimed in any one of the preceding claims, wherein the condenser operates at a second temperature in the range of from 70 to 140 °C

8. Process as claimed in any one of the preceding claims, wherein the scrubber operates at a first temperature in the range of from 120 to 220 °C.

9. Process as claimed in any one of the preceding claims, wherein the weight ratio of the first portion to the second portion is in the range of from 10:1 to 1:1.

10. Process as claimed in any one of the preceding claims, wherein the scrubber removes monoglycerides, diglycerides and dioxins from the first product.

11. Process as claimed in any one of the preceding claims, wherein the vegetable oil is palm oil.

12. Process for reducing the level of dioxins in a palm fatty acid distillate comprising fractionating palm oil by volatilising a fraction of the palm oil in a vessel, condensing a part of the volatile fraction in a scrubber at a first temperature and condensing the other part of the volatile fraction that is not condensed by the scrubber in a condenser at a second temperature lower than the first temperature to form a condensate, collecting a first portion of the condensate as a first product and returning a second portion of the cooled condensate to the scrubber at a temperature of from 100 °C to 160 °C to act as a liquid phase in the scrubber, wherein the first product is the palm fatty acid distillate.

13. Process as claimed in any one of the preceding claims, wherein the second portion of the cooled condensate is returned to the scrubber at a temperature of from 100 °C to 140 °C.

14. Product obtainable by the process of any one of Claims 1 to 13 which is a palm fatty acid distillate comprising at least 98% by weight of free fatty acids, wherein at least 90% by weight of the free fatty acids are palmitic, oleic and linoleic acids, from 0.05 to 0.3% by weight diglycerides, from 0.1 to 0.5% by weight of tocols and less than 0.5 ng/kg dioxins.

15. Product obtainable by the process of any one of Claims 1 to 13 comprising from 35 to 45% by weight diglycerides, wherein at least 85% by weight of the fatty acids in the diglycerides are palmitic, oleic and linoleic acids, from 1.5% to 3% by weight squalene and from 1.5% to 3% by weight tocols.

16. Apparatus adapted to carry out a continuous process for fractionating a vegetable oil comprising a stripper for forming a top fraction and a bottom fraction from the vegetable oil, a scrubber for condensing a part of the top fraction and a condenser for condensing the other part of the top fraction that is not condensed by the scrubber to form a condensate, a divider that divides the condensate from the condenser into at least two portions, a collector for collecting a first portion of the condensate as a first product, a cooling system for reducing the temperature of at least a second portion of the condensate to from 100 °C to 160 °C and a return path for the second portion of the condensate to the scrubber to act as a liquid phase in the scrubber.

## Patentansprüche

1. Kontinuierliches Verfahren zur Fraktionierung eines Pflanzenöls, umfassend das Abstrippen des Pflanzenöls in einem Gefäß unter Bildung einer Kopffraktion und einer Bodenfraktion, Kondensieren eines Teils der Kopffraktion in einem Gaswäscher bei einer ersten Temperatur und Kondensieren des anderen, nicht mittels des Gaswäschers kondensierten Teils der Kopffraktion in einem Kondensator bei einer unterhalb der ersten Temperatur liegenden zweiten Temperatur unter Bildung eines Kondensats, Aufteilen des Kondensats aus dem Kondensator in zumindest zwei Portionen, Sammeln einer ersten Portion des Kondensats als erstes Produkt, und Rückführen einer zweiten Portion des gekühlten Kondensats in den Gaswäscher bei einer Temperatur von 100°C bis 160°C, so dass sie in dem Gaswäscher als Flüssigphase fungiert.

2. Verfahren nach Anspruch 1, weiterhin umfassend das Überführen der Bodenfraktion aus dem Gefäß in einen Desodorierer und Sammeln eines zweiten Produkts als Bodenfraktion aus dem Desodorierer.

3. Verfahren nach Anspruch 1, wobei die Bodenfraktion aus dem Gefäß als zweites Produkt gesammelt wird.

4. Verfahren nach Anspruch 2 oder Anspruch 3, wobei das zweite Produkt zumindest 85 Gew.-% an Triglyceriden umfasst.

5. Verfahren nach einem der vorhergehenden Ansprüche, wobei das erste Produkt zumindest 95 Gew.-% an freien Fettsäuren und weniger als 0.5 ng/kg an Dioxinen umfasst.

6. Verfahren nach einem der vorhergehenden Ansprüche, wobei das erste Gefäß eine Strippvorrichtung, die bei einer Temperatur im Bereich von 200 bis 280°C betrieben wird, und einen Gaswäscher, der bei einer niedrigeren Temperatur betrieben wird, umfasst.

7. Verfahren nach einem der vorhergehenden Ansprüche, wobei der Kondensator bei einer zweiten Temperatur im Bereich von 70 bis 140°C betrieben wird.

8. Verfahren nach einem der vorhergehenden Ansprüche, wobei der Gaswäscher bei einer ersten Temperatur im Bereich von 120 bis 220°C betrieben wird.

9. Verfahren nach einem der vorhergehenden Ansprüche, wobei das Gewichtsverhältnis von erster Portion zu zweiter Portion im Bereich von 10:1 bis 1:1 liegt.

10. Verfahren nach einem der vorhergehenden Ansprüche, wobei der Gaswäscher Monoglyceride, Diglyceride und Dioxine aus dem ersten Produkt entfernt.

11. Verfahren nach einem der vorhergehenden Ansprüche, wobei das Pflanzenöl Palmöl ist.

12. Verfahren zur Verringerung der Menge an Dioxinen in einem Palmfettsäure-Destillat, umfassend das Fraktionieren von Palmöl durch Verflüchtigen einer Fraktion des Palmöls in einem Gefäß, Kondensieren eines Teils der flüchtigen Fraktion in einem Gaswäscher bei einer ersten Temperatur und Kondensieren des anderen, nicht mittels des Gaswäschers kondensierten Teils der flüchtigen Fraktion in einem Kondensator bei einer unterhalb der ersten Temperatur liegenden zweiten Temperatur unter Bildung eines Kondensats, Sammeln einer ersten Portion des Kondensats als erstes Produkt, und Rückführen einer zweiten Portion des gekühlten Kondensats in den Gaswäscher bei einer Temperatur von 100 °C bis 160°C, so dass sie in dem Gaswäscher als Flüssigphase fungiert, wobei das erste Produkt das Palmfettsäure-Destillat ist.

13. Verfahren nach einem der vorhergehenden Ansprüche, wobei die zweite Portion des gekühlten Kondensats bei einer Temperatur von 100°C bis 140°C in den Gaswäscher zurückgeführt wird.

14. Produkt, welches mittels des Verfahrens nach einem der Ansprüche 1 bis 13 erhältlich und ein Palmfettsäure-Destillat ist, umfassend zumindest 98 Gew.-% an freien Fettsäuren, wobei zumindest 90 Gew.-% der freien Fettsäuren Palmitin-, Öl- und Linolsäuren sind, 0.05 bis 0.3 Gew.-% an Diglyceriden, 0.1 bis 0.5 Gew.-% an Tocolen, und weniger als 0.5 ng/kg an Dioxinen.

15. Produkt, welches mittels des Verfahrens nach einem der Ansprüche 1 bis 13 erhältlich ist, umfassend 35 bis 45 Gew-.% an Diglyceriden, wobei zumindest 85 Gew.-% der Fettsäuren in den Diglyceriden Palmitin-, Öl- und Linolsäuren sind, 1.5 Gew.-% bis 3 Gew.-% an Squalen, und 1.5 Gew.-% bis 3 Gew.-% an Tocolen.

16. Vorrichtung, die zur Durchführung eines kontinuierlichen Verfahrens zur Fraktionsführung eines Pflanzenöls angepasst ist, umfassend eine Strippvorrichtung zur Bildung einer Kopffraktion und einer Bodenfraktion aus dem Pflanzenöl, einen Gaswäscher zum Kondensieren eines Teils der Kopffraktion und einen Kondensator zum Kondensieren des anderen, nicht mittels des Gaswäschers kondensierten Teils der Kopffraktion zur Bildung eines Kondensats, eine Aufteilungsvorrichtung, die das Kondensat aus dem Kondensator in zumindest zwei Portionen aufteilt, eine Sammelvorrichtung zum Sammeln einer ersten Portion des Kondensats als erstes Produkt, ein Kühlsystem zum Verringern der Temperatur zumindest einer zweiten Portion des Kondensats auf 100°C bis 160°C, und einen Rücklauf für die zweite Portion des Kondensats zum Gaswäscher, so dass sie in dem Gaswäscher als Flüssigphase fungiert.

## Revendications

1. Procédé continu pour le fractionnement d'une huile végétale comprenant la distillation par entraînement à la vapeur de l'huile végétale contenue dans une cuve pour former une fraction de tête et une fraction de fond, la condensation d'une partie de la fraction de tête dans un épurateur à une première température et la condensation de l'autre partie de la fraction de tête qui n'est pas condensée par l'épurateur dans un condenseur à une seconde température qui est inférieure à la première pour former un condensat ; la division du condensat sortant du condenseur en au moins deux parties, la collecte d'une première partie du condensat en tant que premier produit et le renvoi de la seconde partie du condensat refroidi vers l'épurateur à une température de 100 à 160 °C pour servir de phase liquide dans l'épurateur.

2. Procédé selon la revendication 1, comprenant en outre le transfert de la fraction de fond sortant de la cuve vers un désodoriseur et la collecte d'un second produit sous forme de fraction de fond à la sortie du désodoriseur.

3. Procédé selon la revendication 1, dans lequel la fraction de fond est collectée à la sortie de la cuve en tant que second produit.

4. Procédé selon la revendication 2 ou la revendication 3, dans lequel le second produit comprend au moins 85 % en poids de triglycérides.

5. Procédé selon l'une quelconque des revendications précédentes, dans lequel le premier produit comprend au moins 95 % en poids d'acides gras libres et moins de 0,5 ng/kg de dioxines.

6. Procédé selon l'une quelconque des revendications précédentes, dans lequel la première cuve comprend un distillateur par entraînement à la vapeur opérant à une température dans la plage de 200 à 280 °C et un épurateur opérant une température plus basse.

7. Procédé selon l'une quelconque des revendications précédentes, dans lequel le condenseur opère à une seconde température dans la plage de 70 à 140 °C.

8. Procédé selon l'une quelconque des revendications précédentes, dans lequel l'épurateur opère à une première température dans la plage de 120 à 220 °C.

9. Procédé selon l'une quelconque des revendications précédentes, dans lequel le rapport en poids de la première partie à la seconde partie est dans la plage de 10:1 à 1:1.

10. Procédé selon l'une quelconque des revendications précédentes, dans lequel l'épurateur élimine les monoglycérides, les diglycérides et les dioxines du premier produit.

11. Procédé selon l'une quelconque des revendications précédentes, dans lequel l'huile végétale est l'huile de palme.

12. Procédé de réduction du niveau de dioxines dans un distillat d'acides gras de palme comprenant le fractionnement de l'huile de palme par volatilisation d'une fraction de l'huile de palme dans une cuve, la condensation d'une partie de la fraction volatile dans un épurateur à une première température et la condensation de l'autre partie de la fraction volatile qui n'est pas condensée par l'épurateur dans un condenseur à une second température qui est inférieure à la première pour former un condensat, la collecte d'une première partie du condensat en tant que premier produit et le renvoi d'une seconde partie du condensat refroidi vers l'épurateur à une température de 100 à 160 °C pour servir de phase liquide dans l'épurateur, le premier produit étant un distillat d'acides gras de palme.

13. Procédé selon l'une quelconque des revendications précédentes, dans lequel la seconde partie du condensat refroidi est renvoyée vers l'épurateur à une température de 100 à 140 °C.

14. Produit pouvant être obtenu par le procédé selon l'une quelconque des revendications 1 à 13 qui est un distillat d' acides gras de palme comprenant au moins 98 % en poids d'acides gras libres, dans lequel au moins 90 % en poids desdits acides gras libres sont des acides palmitique, oléique et linoléique, de 0,05 à 0,3 % en poids de diglycérides, de 0,1 à 0,5 % en poids de tocols et moins de 0,5 ng/kg de dioxines.

15. Produit pouvant être obtenu par le procédé selon l'une quelconque des revendications 1 à 13 comprenant de 35 à 45 % en poids de diglycérides, dans lequel au moins 85 % en poids desdits acides gras dans les diglycérides sont des acides palmitique, oléique et linoléique, de 1,5 à 3 % en poids de squalène et de 1,5 à 3 % en poids de tocols.

16. Appareil adapté pour mettre en oeuvre un procédé continu pour le fractionnement d'une huile végétale comprenant un distillateur par entraînement à la vapeur pour former une fraction de tête et une fraction de fond à partir de l'huile végétale, un épurateur pour condenser une partie de la fraction de tête et un condenseur pour condenser l'autre partie de la fraction de tête qui n'est pas condensée par l'épurateur pour former un condensat, un séparateur pour diviser le condensat sortant du condenseur en au moins deux parties, un collecteur pour collecter une première partie du condensat en tant que premier produit, un système de refroidissement pour réduire la température au moins de la seconde partie du condensat à 100-160 °C et une voie de renvoi de la seconde partie du condensat vers l'épurateur pour servir de phase liquide dans l'épurateur.
